# EUROPÄISCHE PATENTANMELDUNG

(11) **EP 1 953 488 A1**
(43) Veröffentlichungstag der Anmeldung: **06.08.2008**
(21) Anmeldenummer: 07002345.2
(22) Anmeldetag: 02.02.2007
(51) Int. Cl.: F28C 1/02

(54) **Verdunstungskühler und dessen Verwednung, sowie Gasturbinenanlage mit einem Verdunstungskühler**

(71) Anmelder: SIEMENS AKTIENGESELLSCHAFT, 80333 München (DE)
(72) Erfinder: Birkner, Jens, 46045 Oberhausen (DE); David, Walter, 45481 Mülheim an der Ruhr (DE); Gensler, Rudolf, Dr., 91058 Erlangen (DE); Grassmann, Arne, Dr., 45259 Essen (DE)

(57) **Zusammenfassung**

Ein Verdunstungskühler (2) zur Kühlung eines Gasstroms, insbesondere eines Luftstroms, mit einer Anzahl von in einem Strömungskanal (6) angeordneten, über eine Aufgabevorrichtung (16) mit einer zu verdunstenden oder zu verdampfenden Flüssigkeit, vorzugsweise Wasser, beaufschlagbaren Kühlelementen (12), soll bei unkritischem Betriebsverhalten und einfacher Handhabung für einen besonders hohen Wirkungsgrad bezüglich der Verdampfung oder Verdunstung der Flüssigkeit ausgelegt sein und somit bei geringem Flüssigkeitsdurchsatz eine besonders hohe Kühlwirkung auf den Gasstrom ausüben. Dazu ist erfindungsgemäß vorgesehen, dass die Oberfläche zumindest eines der Kühlelemente (12) zumindest im einem zur Ausbildung eines Flüssigkeitsfilmes bestimmten Teilbereich einen hydrophilen Charakter besitzt.

## Beschreibung

Die Erfindung betrifft einen Verdunstungskühler zur Kühlung eines Gasstroms, insbesondere eines Luftstroms, mit einer Anzahl von in einem Strömungskanal angeordneten, über eine Aufgabevorrichtung mit einer zu verdunstenden oder zu verdampfenden Flüssigkeit, vorzugsweise Wasser, beaufschlagbaren Kühlelementen. Die Erfindung betrifft ferner eine Verwendung eines derartigen Verdunstungskühlers sowie eine Gasturbinenanlage mit einem Verdunstungskühler.

Der Wirkungsgrad der Energieumwandlung in einer Gasturbine und insbesondere deren Leistung hängen unter anderem von der Ansaugtemperatur der über einen Verdichter der Brennkammer zugeführten Verbrennungsluft ab. Je geringer die Temperatur der aus der Umgebung angesaugten Luft ist, desto höher ist in der Regel der Wirkungsgrad des Verdichters. Die erhöhte Gesamtleistung der Gasturbine lässt sich auf die höhere Dichte der kühleren Ansaugluft und die damit erreichbaren größeren Kühlluftmassenströme zurückführen. Üblicherweise ist daher die in den Sommermonaten erzielbare Energieausbeute erheblich geringer als im Winter. Dementsprechend kann durch eine Kühlung der Ansaugluft die Gesamtleistung und der Gesamtwirkungsgrad einer Gasturbine - auch unter Berücksichtigung der für die Kühlung aufzuwendenden Energie - oftmals deutlich gesteigert werden. Ein für die Umwelt positiver Nebeneffekt kann dabei auch in der Minderung von Stickoxid- und/oder CO₂-Emissionen bestehen.

Insbesondere in Regionen oder an Standorten, an denen die relative Feuchte der Umgebungsluft vergleichsweise niedrig ist, kann die Temperatur der Ansaugluft über das Prinzip der Verdunstungskühlung auf verhältnismäßig effektive Weise reduziert und damit der Wirkungsgrad und die Leistung einer Gasturbine gesteigert werden: Durch das Verdüsen bzw. Verteilen auf große Oberflächen verdunstet eine Flüssigkeit, zweckmäßigerweise Wasser, in trockener, warmer Luft in nennenswerten Mengen. Die erforderliche Verdunstungsenergie wird der Umgebungsluft entzogen, die sich demzufolge abkühlt. Standort- und systemabhängig werden dabei Temperaturdifferenzen von 5 K bis 20 K erreicht. Gleichzeitig nimmt der Feuchtigkeitsgehalt der Luft zu. Die Investitionskosten für derartige Kühlsysteme sind zwar nicht unerheblich, jedoch ergeben sich typischerweise Amortisationszeiten von 1 bis 3 Jahren, was bereits zu einem vermehrten Einsatz dieser Systeme geführt hat.

Gegenüber einer unmittelbaren und direkten Befeuchtung der Ansaugluft durch Einsprühen von Wasser in den Luftstrom, z. B. mit Hilfe von vor dem Verdichtereintritt angeordneten Einsprühgittern, wird bei der Verdunstungskühlung das Wasser durch adiabatische Verdampfung oder Verdunstung von der Luft aufgenommen. Damit ist das Risiko des Übersprühens oder der Übersättigung mit Wasser gegenüber der Luftbefeuchtung deutlich herabgesetzt. Technisch umgesetzt und realisiert wird das Prinzip der Verdunstungskühlung zur Reduktion der Ansaugtemperatur bei einer Gasturbine üblicherweise in Verdunstungskühlern mit wabenförmigen Kühlelementen, die sich z. B. vor oder zwischen den Filterstufen eines Einlassfilters für die Frischluft befinden. Dazu wird eine Anzahl von in der Regel senkrecht stehenden, kaskadenartig angeordneten Kühlelementen oder Kühlblechen, die gelegentlich auch als Riesel- oder Fallbleche bezeichnet werden, von oben mit Hilfe einer geeigneten Aufgabevorrichtung mit Wasser beaufschlagt (z. B. beregnet oder besprüht), so dass das Wasser möglichst unter Ausbildung eines Wasserfilms an dem jeweiligen Element oder Blech herabläuft.

Senkrecht dazu wird innerhalb eines durch eine Anzahl von Gehäusewänden begrenzten Strömungskanals die Ansaugluft geführt (im so genannten Kreuzstrom). Ein Teil des herablaufenden Wassers wird durch die in den Verdunstungskühler eintretende, vergleichsweise warme Ansaugluft verdunstet oder verdampft, wodurch die Temperatur des aus der Kühlapparatur austretenden Luftstroms abgesenkt wird. Das überschüssige, nicht verdunstete Wasser wird am Boden der Kühlbleche gesammelt und mit Hilfe einer Niederdruck-Pumpanlage zurück an den Ausgangspunkt gepumpt, so dass insgesamt ein offener, kaskadenförmiger Kühlwasserkreislauf realisiert ist.

Ähnlich aufgebaut wie Verdunstungskühler sind so genannte Fallfilmverdampfer, bei denen allerdings in der Regel nicht die Kühlung eines Gasstroms, sondern die Dampferzeugung als Auslegungsziel im Vordergrund steht, und bei denen üblicherweise eine Anzahl von mit dem zu verdampfenden Wasser beaufschlagten Fallblechen oder Fallrohren mit einer elektrischen Heizvorrichtung von innen beheizt wird.

Die Kühlelemente oder Kühlbleche herkömmlicher Verdunstungskühler sind üblicherweise aus einem rostfreien Edelstahl, manchmal aber auch z. B. aus Kunststoff oder aus papierbasierten Materialien, gefertigt, wobei sich das aufgegebene Wasser auf der zur Verfügung stehenden Oberfläche relativ schlecht und ungleichmäßig verteilt. Soll die gesamte Fläche des jeweiligen Kühlelementes zur Verdunstung, d. h. für eine effektive Kühlung des angesaugten Luftstroms, genutzt werden, so muss mit einem großen Wasserüberschuss beregnet werden. Dies führt zu relativ dicken Wasserfilmen. Bei dicken Wasserfilmen erhöht sich jedoch die Wahrscheinlichkeit, dass Wasser durch die Luftströmung mitgerissen wird und dass Tropfen in die Beschaufelung der Gasturbine (speziell ihres Verdichters) gelangen, was unerwünschte erosive Auswirkungen nach sich ziehen kann.

In der Praxis ist es daher bei allen Verdunstungs- oder Verdampfungskühlern mit offenem Kühlwasserkreislauf problematisch, die richtige Wassermenge derart einzustellen, dass Wassertropfen nicht in die Beschaufelung mitgerissen werden, aber trotzdem genügend Wasser in den Verdunstungskühler eingebracht wird, um eine möglichst optimale Kühlung der Ansaugluft zu gewährleisten. Im Sinne einer konservativen, auf Sicherheit bedachten Auslegung wird die Wassermenge meist so eingestellt, dass ein Tropfenschlag auf jeden Fall vermieden wird. Das theoretisch erreichbare Kühlpotenzial wird dabei zwangsläufig nicht ausgeschöpft, da die Verdunstungs- oder Verdampfungsoberfläche nicht optimal genutzt wird.

Der Erfindung liegt daher die Aufgabe zugrunde, einen Verdunstungskühler der eingangs genannten Art anzugeben, der bei unkritischem Betriebsverhalten und einfacher Handhabung einen besonders hohen Wirkungsgrad bezüglich der Verdampfung oder Verdunstung der ihm zugeführten Kühlflüssigkeit erreicht und damit eine besonders hohe Kühlwirkung auf das ihn durchströmende gasförmige Strömungsmedium, insbesondere Luft, ausübt. Insbesondere soll bei der Verwendung eines derartigen Verdunstungskühlers als Ansaugkühler für eine Gasturbine die Erosionsgefahr für die ihm strömungsmediumsseitig nachgeschalteten Anlagenkomponenten, speziell für die Verdichterschaufeln, gering gehalten sein. Weiterhin soll eine einen derartigen Verdunstungskühler aufweisende Gasturbinenanlage mit einem besonders hohem Wirkungsgrad und mit einer hohen Gesamtleistung angegeben werden.

In Bezug auf den Verdunstungskühler wird die Aufgabe erfindungsgemäß gelöst, indem die Oberfläche zumindest eines der Kühlelemente zumindest im einem zur Ausbildung eines Flüssigkeitsfilmes bestimmten Teilbereich einen dauerhaft hydrophilen Charakter besitzt.

Die Erfindung geht von der Überlegung aus, dass der von der zu verdunstenden oder zu verdampfenden Flüssigkeit, insbesondere Wasser, auf der Oberfläche der Kühlelemente gebildete Flüssigkeitsfilm gerade so dick sein sollte, dass es trotz des an sich erwünschten, durch die Verdunstung oder Verdampfung hervorgerufenen Flüssigkeitsverlustes an keiner Stelle der benetzten Oberfläche zu einem Abreißen des Flüssigkeitsfilmes kommt. Dies würde nämlich insgesamt zu einem Rückgang der Verdampfung und damit auch zu einer Reduzierung der erreichbaren Kühlwirkung führen. Andererseits sollte der Flüssigkeitsfilm für eine effektive Verdunstung oder Verdampfung auch nicht dicker als unbedingt notwendig sein. Dies gilt insbesondere für solche Verdunstungskühler, die zur Kühlung des Ansaugluftstroms einer Gasturbine verwendet werden, um die Gefahr eines Mitreißens von Flüssigkeitströpfchen in die Verdichterbeschaufelung möglichst gering zu halten.

Um derartige Verhältnisse auch bei ungleichmäßiger Flüssigkeitsaufgabe oder Beregnung auf einfache und unproblematische Weise einstellen zu können, sollte die Oberfläche der üblicherweise wabenförmigen Kühlelemente oder Kühlbleche derart beschaffen sein, dass sich durch die spezifische Art der Flüssigkeit-Festkörper-Wechselwirkung ein besonders gleichmäßiger homogener Flüssigkeitsfilm gewissermaßen von selber ausbildet, bzw. dass die Ausbildung eines solchen Films zumindest unterstützt wird. Dabei sollte möglichst die gesamte zur Verfügung stehende Oberfläche der Kühlelemente genutzt werden, sprich von der zu verdunstenden Flüssigkeit benetzt sein.

Nach dem nunmehr vorgeschlagenen Konzept wird daher die Benetzbarkeit der Kühlelemente durch eine gezielt hydrophil (wasseranziehend oder "wasserliebend") gestaltete oder modifizierte Oberfläche - zumindest im Bereich der relevanten Benetzungsregion - verbessert. Die entsprechende Behandlung der Oberflächen zur Erzeugung des hydrophilen Verhaltens wird auch als Hydrophilierung bezeichnet. Dies hat zur Folge, dass ein mit der hydrophilierten Oberfläche in Kontakt tretender Flüssigkeitstropfen sich in der Art einer flachen Scheibe oder flachen Kugelkappe großflächig ausbreitet beziehungsweise bei geneigter oder senkrechter Anordnung des jeweiligen Kühlelementes als flacher Streifen an diesem herunterrinnt und dabei besonders gut an der Oberfläche haftet. Aufgrund dieser guten Haftwirkung ist ein Mitreißen durch die Gas- oder Luftströmung sicher vermieden. Um eine vollständige Benetzung der Oberfläche der Kühlelemente zu erreichen, ist im Vergleich zu einer unbehandelten oder nicht modifizierten Oberfläche ein deutlich geringerer Wasserüberschuss nötig, was die erforderliche Filmdicke deutlich reduziert und ebenfalls dazu beiträgt, die Gefahr durch sich ablösende oder mitgerissene Flüssigkeitstropfen zu mindern.

Als quantitatives Maß für die Hydrophilie der so behandelten Oberflächen kann dabei der so genannte Kontaktwinkel dienen, den ein Flüssigkeitstropfen auf der Oberfläche des Kühlelementes mit derselben bildet. Allgemein haben hydrophile Oberflächen gegenüber Wasser Kontaktwinkel, die kleiner sind als 90°. Vorzugsweise besitzt die behandelte Oberfläche des jeweiligen Kühlelements gegenüber Wasser jedoch einen Kontaktwinkel von weniger als 40°, insbesondere weniger als 20° und besonders bevorzugt weniger als 10°. Vorteilhafterweise ist das Hydrophilierungsverfahren derart gewählt, dass der hydrophile Charakter der behandelten Oberflächen im Laufe des späteren Betriebslebens möglichst dauerhaft bzw. langlebig ist, so dass der ursprünglich eingestellte Kontaktwinkel sich nicht oder nur unwesentlich vergrößert.

Vorteilhafterweise sind die Oberflächen sämtlicher Wände und Einbauten des Verdunstungskühlers, die infolge einer Beaufschlagung mit Flüssigkeit den Verdampfungs- oder Verdunstungsprozess unterstützen, hydrophiliert, unabhängig von ihrer Gestalt, ihrer Anordnung und Ausrichtung und vom jeweiligen Untergrundwerkstoff. Beispielsweise können neben den in den Strömungskanal eingehängten wabenartigen Kühlelementen auch die innen liegenden, den Strömungskanal für das gasförmige Strömungsmedium begrenzenden Wandabschnitte des Kühlergehäuses für eine Beaufschlagung mit Wasser ausgelegt und dementsprechend mit einer gezielt hydrophil gestalteten Oberfläche versehen sein.

In einer vorteilhaften Ausgestaltung umfasst das jeweilige Kühlelement einen Grundkörper, z. B. aus einem metallischen Werkstoff, der vor dem Einbau in den Verdunstungskühler bzw. vor dessen Inbetriebnahme im Zuge eines geeignet gewählten Beschichtungsverfahrens mit einer hydrophilen Oberflächenschicht überzogen wurde.

Ein erstes, zu besonders vorteilhaften Ergebnissen, insbesondere zu geringen Kontaktwinkeln gegenüber Wasser, führendes Beschichtungsverfahren ist das so genannte Sol-Gel-Verfahren.

Unter dem Begriff "Sol-Gel-Beschichtung" ist zunächst jede im Rahmen eines so genannten Sol-Gel-Prozesses auf einen metallischen, einen keramischen oder auch auf einen aus Kunststoff bestehenden Untergrundwerkstoff (Substrat) aufgebrachte Beschichtung zu verstehen. Bei einem Sol-Gel-Verfahren wird üblicherweise in einem ersten Schritt eine kolloidale Suspension oder Dispersion von Feststoffpartikeln geringen Durchmessers - typischerweise 1 nm bis etwa 100 nm (so genannte Nanopartikel) - in einem wässrigen oder organischen Lösungsmittel durch einen Sol-Gel-Übergang (Gelation) in einen amorphen, nanostrukturierten Gelzustand überführt. Bei der Sol-Gel-Transformation kommt es zu einer dreidimensionalen Vernetzung der Nanopartikel im Lösungsmittel, wodurch das Gel Festkörpereigenschaften erhält. Anschließend wird in einem zweiten Schritt das Gel beziehungsweise der auf den Untergrundwerkstoff aufgebrachte Gelüberzug durch Wärmebehandlung oder auf fotochemischem Wege gehärtet (gesintert) und somit in einen Werkstoff bzw. in eine stabile und haltbare Beschichtung mit keramischen oder glasartigen Eigenschaften überführt.

Als Ausgangsstoffe (so genannte Precursor) zur Herstellung der auch als Sol bezeichneten kolloidalen Beschichtungslösung finden beispielsweise Tetraethoxysilan, Tetramethylorthosilikat, Natriumsilikat oder Glykolester sowie verschiedene weitere metallorganische Polymere, insbesondere Metallalkoxide und/oder Metallester, Verwendung. Durch Beimischung zusätzlicher organischer Moleküle mit verschiedenartigen funktionellen Gruppen und/oder durch die Zugabe anorganischer Mikropartikel und/oder Nanopartikel lassen sich die chemischen und physikalischen Eigenschaften der späteren Beschichtung auf vielfältige, gut steuerbare und kontrollierbare Weise zielgerichtet beeinflussen. Im hier beschriebenen Anwendungsfall ist die Herstellung einer Beschichtung mit einer möglichst stark hydrophilen Oberfläche ein maßgebliches Auslegungsziel bei der Wahl der Precursor für die kolloidale Lösung. Sekundäre Ziele können beispielsweise eine gute Haltbarkeit auf dem Substrat, hohe Kratzfestigkeit, hohe Temperaturbeständigkeit oder auch die Erzielung eines guten Korrosionsschutzes für das von der Beschichtung bedeckte, in der Regel metallische Substrat sein.

Das üblicherweise unter einer Vielzahl dabei ablaufender Hydrolyse- oder Polymerisationsreaktionen hergestellte Sol wird auf das Substrat beispielsweise durch Spritzen, Tauchen oder Schleudern aufgebracht. Zur Beschichtung größerer, weitgehend ebener Flächen wird vorzugsweise das so genannte Dip-Coating-Verfahren eingesetzt. Dabei wird das zu beschichtende Substrat, hier insbesondere das jeweilige Kühlelement, in das Sol eingetaucht und mit konstanter Geschwindigkeit wieder herausgezogen, so dass ein flüssiger Sol-Film auf der Substratoberfläche haften bleibt. Der zunächst flüssige Sol-Film transformiert sich nach kurzer Trocknung in einen mehr oder weniger festen Gel-Film, der dann z. B. einer Wärmenachbehandlung unter sauerstoffhaltiger Atmosphäre (Luft) unterzogen wird. Bei Temperaturen von bis ca. 400 °C zersetzen sich die organischen Bestandteile der metallorganischen Polymere und entweichen hauptsächlich in Form von Kohlendioxid und Wasser. Der zurückbleibende amorphe und nanoporöse Metalloxid-Film beginnt bei Temperaturen über 500 °C zu sintern. Gleichzeitig finden Keimbildung und Kristallwachstum statt, so dass aus dem amorphen und porösen Gel-Film ein nanokristalliner, dichter oxidkeramischer Film entsteht.

Die chemische Sol-Zusammensetzung, die Schichtabscheidungsbedingungen (z. B. Extraktionsgeschwindigkeit) sowie die Wärmebehandlungsparameter (Aufheizgeschwindigkeit, Temperatur, Haltedauer) haben einen erheblichen Einfluss auf die Schichteigenschaften und werden nach den oben bereits erläuterten Zielvorgaben eingestellt. Aufgrund der Ausbildung kovalenter Bindungen zwischen Schicht und Substrat werden hohe Adhäsionswerte erzielt, was für eine lange Lebensdauer und hohe mechanische Belastbarkeit der Beschichtung günstig ist.

Alternativ oder zusätzlich zu den rein oxidkeramischen Sol-Gel-Schichten können auch organisch-anorganische Hybridschichten zur Anwendung kommen, mit denen sich im Allgemeinen größere Schichtdicken und höhere Duktilitätswerte erzielen lassen. In bestimmten Fällen können die Behandlungstemperaturen auch deutlich unterhalb von 300 °C liegen. Alternativ oder zusätzlich zur Wärmebehandlung kann auch eine Härtung mit UV-Licht oder mit sichtbarem Licht vorgesehen sein.

Alternativ zu einem Sol-Gel-Verfahren können auch andere Beschichtungs- oder Behandlungsmethoden zur Hydrophilierung der Verdunstungs- oder Verdampfungsoberflächen zum Einsatz kommen, die zum Teil einfacher zu applizieren sind, geringere Kosten verursachen bzw. zu einer geringeren Freisetzung unerwünschter Nebenprodukte, z. B. Lösungsmittel, führen.

Beispielsweise kann es vorgesehen sein, auf einem Grundkörper eines Kühlelementes eine Schicht aus einem geeigneten nasschemischen Lack aufzubringen und so die gewünschte hydrophile Oberfläche herzustellen. Denkbar sind in diesem Zusammenhang z. B. Acrylat-Lacke oder Lacke auf der Basis von Polyesterharzen, Polysiloxanen, Epoxiden, Polyurethanen oder Polysilazanen. Voraussetzung für Hydrophilie und damit gute Benetzbarkeit durch Wasser ist die Polarität der Oberfläche. Polare Gruppen in Lackharzen tragen zur Erhöhung der Oberflächenenergie und damit zur besseren Benetzbarkeit der Oberfläche durch Wasser bei. Die Ansätze zur Herstellung hydrophiler Lacke beruhen also auf dem Einbau entsprechender chemischer Gruppen, wie z. B. -OH, -COOH, -NH₂, -SH. Darüber hinaus kann ein Lack durch Zugabe von speziellen Füllstoffteilchen, insbesondere hydrophile Aerosile, hydrophil eingestellt werden. Entsprechende Details sind dem Fachmann bereits aus anderen Anwendungen und Einsatzgebieten derartiger Lacke bekannt, zu denen beispielsweise Antibeschlagbeschichtungen von Brillen, Scheinwerfergläsern und Helmvisieren gehören. Ferner werden z. B. bestimmte medizintechnische Erzeugnisse mit derartigen hydrophilen Beschichtungen versehen.

Eine weitere Möglichkeit zur Erzeugung der gewünschten Oberflächeneigenschaften bieten die verschiedenartigen Verfahren der atmosphärischen oder vakuumunterstützten Plasmabeschichtung. Durch die so genannte chemische Gasphasenabscheidung oder Chemical Vapour Deposition (CVD) können reaktive Silanverbindungen in Form einer Schicht auf Oberflächen abgeschieden werden. Dabei erfolgt die Abscheidung der Feststoffkomponente aufgrund einer chemischen Reaktion aus der Gasphase an der erhitzten Oberfläche des Substrates. Bei Verwendung entsprechender Silikanprecursoren lassen sich somit auch hydrophile Überzüge realisieren. Die Abscheidung kann sowohl im Niederdruckplasma als auch unter atmosphärischen Bedingungen erfolgen. Derzeit finden solche Verfahren ebenfalls im Bereich der Antibeschlagbeschichtung bzw. bei medizinischen Applikationen Anwendung. Durch die so genannte physikalische Gasphasenabscheidung oder Physical Vapour Deposition (PVD) können ebenfalls Schichten unter Vakuumbedingungen abgeschieden werden, insbesondere metallische oder metallorganische Überzüge auf Kunststoff-Substraten, die zu einer Erhöhung der Oberflächenenergie führen und damit eine Verbesserung der Benetzbarkeit des Substrates bewirken. Im Unterschied zum CVD-Verfahren wird beim PVD-Verfahren die Schicht direkt durch Kondensation eines Materialdampfes des Ausgangsmaterials gebildet.

Eine weitere Möglichkeit zur gezielten Modifizierung der Oberflächeneigenschaften eines Werkstoffs, insbesondere zur Steigerung der Oberflächenenergie und zur Hydrophilierung, bietet die auch als Pyrosil-Verfahren bekannte Flammbeschichtung oder flammpyrolytische Abscheidung einer amorphen, hochvernetzten Silikatschicht durch brennbare silanhaltige Gase auf dem Substratmaterial. Dazu wird die zu behandelnde Oberfläche durch den oxidierenden Bereich einer Gasflamme geführt, in die zuvor eine siliziumhaltige Substanz, ein so genannter Precursor, definiert eindosiert wurde. Auf diesem Verfahren beruhende Silikatschichten sind üblicherweise zwischen 20 nm und 40 nm dick und haben eine starke Hydrophilierung der Oberfläche zur Folge.

Weiterhin existieren verschiedene Verfahren, die schlagwortartig unter dem Oberbegriff "physikalische Oxidation" zusammengefasst werden können, und die durch eine gezielte Oxidation von Oberflächen den polaren Anteil der Oberflächenenergie erhöhen und somit die Benetzbarkeit durch Wasser begünstigen. In diesem Sinne oxidierend wirken beispielsweise reaktive Plasmen, etwa bei einer Plasmabehandlung in Gegenwart von Sauerstoff, Argon oder Luft. Diese Prozesse können sowohl im Vakuum als auch unter Atmosphärenbedingungen durchgeführt werden. Bei dem ebenfalls zur Gruppe der physikalischen Oxidation gehörigen Verfahren der Koronaentladung oder Koronabehandlung, wie es derzeit beispielsweise in der Kunststofftechnik zur Verbesserung der Bedruckbarkeit und Verklebbarkeit von Kunststofffolien gängig ist, wird das Substrat einer elektrischen Entladung ausgesetzt, wobei ein die Elektroden und das Substrat umgebendes Gas, z. B. Luft, ionisiert wird. Das Beflammen ist ebenfalls ein Verfahren zur Oxidation von Kunststoffoberflächen, mit dem hydrophile Eigenschaften eingestellt werden können. Die elektrolytische Oxidation ist dagegen vor allem zur Modifizierung von Aluminiumoberflächen geeignet.

Auch durch die Behandlung mit stark oxidierenden Flüssigkeiten, z. B. mit Wasserstoffperoxid, oder mit stark oxidierenden Gasen, z. B. mit Ozon, lässt sich die Polarität und damit die Hydrophilie von Oberflächen erhöhen. Bekannt ist derzeit beispielsweise das Ozonisieren bzw. Fluorieren im Bereich der Kunststofftechnik, z. B. in der Folientechnik sowie bei der Behandlung von Kraftstofftanks aus Kunststoff. Derartige Verfahren können zusammenfassend als "chemische Oxidation" bezeichnet werden.

Schließlich kann es auch vorgesehen sein, bei einem Kühlelement eines Verdunstungskühlers die gewünschten hydrophilen Oberflächeneigenschaften durch chemisches Beizen oder Anätzen oder durch Phosphatierung der Oberfläche einzustellen. Unter Beizen, das gegenwärtig primär der Entfernung von Verunreinigungen wie Rost, Verzunderungen etc. dient, versteht man das Behandeln von metallischen Oberflächen mit Säuren, z. B. mit Salzsäure, Schwefelsäure oder Salpetersäure (saures Beizen), bzw. mit Laugen, z. B. mit Natronlauge (alkalisches Beizen). Beim Phosphatieren werden die metallischen Substrate mit einer wässrigen Phosphatlösung behandelt. Auf der Metalloberfläche entstehen dabei durch chemische Reaktionen anorganische Konversionsschichten, die korrosionshemmende Wirkungen aufweisen und gut beschichtbar, d. h. hydrophil sind.

Die mit der Erfindung erzielten Vorteile bestehen insbesondere darin, dass durch die gezielte Oberflächenbehandlung und Hydrophilierung der zur Flüssigkeitsverdampfung oder -verdunstung in einem Verdunstungskühler vorgesehenen Einbauten und Kühlelemente, insbesondere von wabenartigen Kühlblechen, infolge der besseren Benetzbarkeit eine Vergrößerung bzw. eine effizientere Nutzung der aktiven Wärmeübertragungsfläche erreicht wird. Bei der Verwendung eines derartigen Verdunstungskühlers zur Kühlung eines Gasstroms, z. B. in einem Ansaugkühler einer Gasturbine, lässt sich damit auch bei vergleichsweise sparsamer Flüssigkeitszufuhr eine besonders hohe Kühlwirkung erzielen. Gleichzeitig wird ein Mitreißen von Flüssigkeitstropfen durch die Gasströmung stark unterdrückt oder verhindert, wodurch beispielsweise die Korrosions- und Erosionsgefahr für eine dem Verdunstungskühler nachgeschaltete thermische Kolbenmaschine oder eine thermische Strömungsmaschine, insbesondere eine Gasturbine, herabgesetzt ist. Durch den hohen Wirkungsgrad des Ansaugkühlers steigt auch der Wirkungsgrad und die Leistungsausbeute der ihm nachfolgenden Gasturbine.

Ein weiterer Vorteil des hier vorgestellten Konzepts besteht darin, dass aufgrund der besseren Oberflächennutzung die Einbautiefe für den Verdunstungskühler bei gleicher Kühlleistung geringer als bislang ausfallen kann. Aufgrund der verringerten Bautiefe ist eine kompaktere Ausführung des Gehäuses und somit eine Reduktion der Fertigungskosten erzielbar. Ferner stellt sich in der Ansaugstrecke ein geringerer Druckverlust als bislang ein.

Das Konzept der Hydrophilierung von Verdampfungs- oder Verdunstungsoberflächen lässt sich darüber hinaus auch bei Fallfilmverdampfern vorteilhaft zur Wirkungsgradsteigerung anwenden, deren primärer Zweck nicht die Kühlung eines Gasstroms, sondern die Produktion von Dampf selber ist, z. B. in der Verfahrenstechnik bei der Destillation von Flüssigkeitsgemischen etc. Anstelle der Beheizung durch einen heißen Gasstrom oder zusätzlich dazu könnte in diesem Fall beispielsweise auch eine elektrische Beheizung von Fallblechen oder -rohren vorgesehen sein.

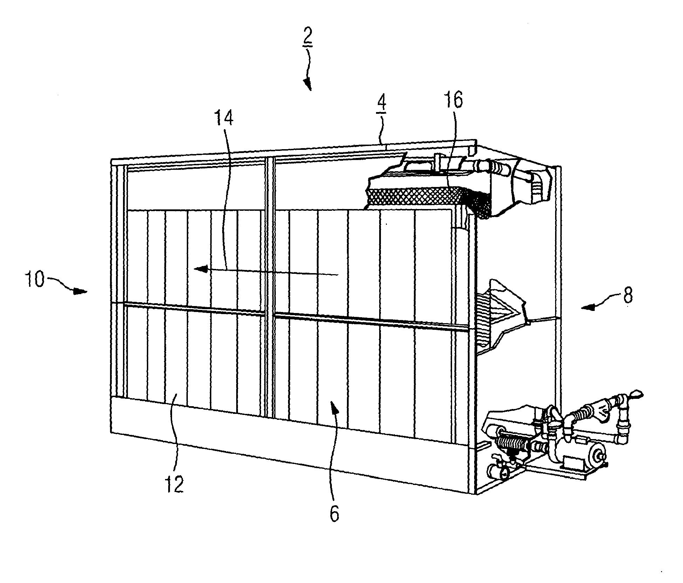

Ein Ausführungsbeispiel der Erfindung wird anhand einer Zeichnung näher erläutert. Darin zeigt die Figur eine teilweise geschnittene Ansicht eines Verdunstungskühlers.

Der in der FIG dargestellte Verdunstungskühler 2 dient als Ansaugkühler zur Kühlung der aus der Umgebung angesaugten und einem hier nicht dargestellten Verdichter einer Gasturbine zugeführten Ansaugluft. Er weist dazu einen von einem geschlossenen Gehäuse 4 umgebenen Strömungskanal 6 mit einem Lufteinlass 8 und einem Luftauslass 10 auf, in dem eine Mehrzahl von jeweils zu Gruppen oder Kühlmodulen zusammengefassten Kühlelementen 12 oder Kühlblechen angeordnet ist. Die flachen Kühlelemente 12 sind jeweils vertikal und parallel zur Strömungsrichtung 14 der im Betrieb aufgeprägten Luftströmung ausgerichtet und über eine im Deckenbereich des Gehäuses 4 oder an der Oberseite des jeweiligen Kühlelementes 12 angeordnete Aufgabevorrichtung 16 beidseitig mit Wasser beaufschlagbar. Damit bildet sich im Betrieb sowohl auf der "Vorderseite" als auch auf der "Rückseite" des jeweiligen Kühlelementes 12 ein von oben nach unten herablaufender Wasserfilm aus, über den die durch den Strömungskanal 6 geleitete Ansaugluft hinwegströmt. Gemäß dem Prinzip der Verdunstungskühlung verdunstet oder verdampft dabei ein Teil des herabfließenden Wassers, wodurch einerseits die relative Feuchte der Luftströmung zunimmt und andererseits ihre Temperatur sinkt. Der nicht verdampfte Teil des die Kühlelemente 12 herabfließenden Wassers sammelt sich im Bodenbereich in einer hier nicht näher dargestellten Sammelvorrichtung und wird anschließend in der Art eines offenen Kreislaufs mit einer hier nicht dargestellten Pumpe zur Aufgabevorrichtung 16 zurückgeführt, wobei der verdunstungsbedingte Flüssigkeitsverlust im Kreislauf durch Zugabe von Frischwasser, vorzugsweise gewöhnlichem Leitungswasser, ausgeglichen wird.

Der erzielbare Kühleffekt ist umso größer, je trockener die in den Verdunstungskühler 2 eingeleitete (Umgebungs-) Luft ist. Darüber hinaus sollte für einen hohen Wirkungsgrad möglichst die gesamte zur Verfügung stehende Oberfläche der Kühlelemente 12 als Verdunstungsfläche ausgenutzt werden, wobei der sich ausbildende Wasserfilm trotz der an sich erwünschten Verdunstung an keiner Stelle abreißen sollte. Auf der anderen Seite sollte die pro Zeiteinheit zugeführte Wassermenge möglichst gering gehalten sein, so dass sich von den Kühlelementen 12 keine Wassertropfen ablösen, welche ansonsten über die Luftströmung in die Beschaufelung des dem Verdunstungskühler 2 nachgeschalteten Verdichters-mitgerissen werden könnten und dort erosionsbedingt Schaden anrichten könnten.

Um diese an sich entgegengesetzten Auslegungsziele besser miteinander in Einklang zu bringen, sind die Kühlelemente 12 des vorliegenden Verdunstungskühlers 2 durch eine auf die Oberfläche des Grundwerkstoffs - hier im Ausführungsbeispiel ein Edelstahl - aufgebrachte Sol-Gel-Beschichtung für eine besonders gute Benetzbarkeit mit der Kühlflüssigkeit, insbesondere Wasser, ausgelegt. Insbesondere werden bei Standard- oder Normalbetriebsbedingungen, z. B. bei einer Einlasstemperatur der Luft von 15 °C und bei einem Luftdruck von 1013 mbar, Kontaktwinkel gegenüber Wasser von weniger als 40°, vorzugsweise weniger als 20° oder sogar weniger als 10° erreicht. Die hydrophile Beschichtung bewirkt eine besonders gleichmäßige Verteilung des Wassers auf der Oberfläche der Kühlelemente 12, auch bei Zufuhr verhältnismäßig geringer Wassermengen. Die Ausbildung homogener, relativ dünner Wasserfilme, auch bei ungleichmäßiger Berieselung und hoher Verdunstungs- oder Verdampfungsleistung, wird gefördert und gleichzeitig die Gefahr eines Mitreißens von Wassertopfen durch die Luftströmung reduziert.

Nach den obigen Ausführungen versteht sich, dass die Sol-Gel-Beschichtung beispielhaft für eine ganze Reihe anderer Methoden steht, mit denen sich auf gezielte Weise eine Hydrophilierung der für die Verdunstung relevanten Oberflächen der Kühlelemente 12 herbeiführen lässt. Dazu zählen insbesondere auch die Beschichtung mit hydrophilen nasschemischen Lacken, die Plasmabeschichtung, die Flammbeschichtung, die physikalische und die chemische Oxidation der Oberflächen sowie das chemische Beizen und das Anätzen mit Säuren oder Laugen. Selbstverständlich richtet sich die Auswahl eines besonders geeigneten Hydrophilierungsverfahrens nach dem (Untergrund-) Werkstoff, aus dem die Kühlelemente 12 gefertigt sind, aber auch nach anderen Aspekten, wie z. B. Aufwand und Kosten, Haltbarkeit der Beschichtung bzw. der modifizierten Oberflächen unter Betriebsbedingungen usw. Besonders bevorzugt sind Verfahren, die kein teures Vakuumequipment benötigen und daher auch sehr flexible und lokal, sprich vor Ort, einsetzbar sind.

## Patentansprüche

1. Verdunstungskühler (2) zur Kühlung eines Gasstroms, insbesondere eines Luftstroms, mit einer Anzahl von in einem Strömungskanal (6) angeordneten, über eine Aufgabevorrichtung (16) mit einer zu verdunstenden oder zu verdampfenden Flüssigkeit, vorzugsweise Wasser, beaufschlagbaren Kühlelementen (12), deren Oberfläche zumindest in einem zur Ausbildung eines Flüssigkeitsfilmes bestimmten Teilbereich einen hydrophilen Charakter besitzt.

2. Verdunstungskühler (2) nach Anspruch 1, wobei der Kontaktwinkel der hydrophilen Oberfläche gegenüber Wasser weniger als 20° und vorzugsweise weniger als 10° beträgt.

3. Verdunstungskühler (2) nach Anspruch 1 oder 2, bei dem mindestens eines der Kühlelemente (12) einen Grundkörper umfasst, der eine hydrophile Oberflächenbeschichtung aufweist.

4. Verdunstungskühler (2) nach einem der Ansprüche 1 bis 3, bei dem mindestens eines der Kühlelemente (12) einen Grundkörper aufweist, der mit einer nach einem Sol-Gel-Verfahren erzeugten hydrophilen Oberflächenschicht versehen ist.

5. Verdunstungskühler (2) nach einem der Ansprüche 1 bis 4, bei dem mindestens eines der Kühlelemente (12) einen Grundkörper aufweist, der mit einer durch Auftragen eines nasschemischen Lackes erzeugten hydrophilen Oberflächenschicht versehen ist.

6. Verdunstungskühler (2) nach einem der Ansprüche 1 bis 5, bei dem mindestens eines der Kühlelemente (12) einen Grundkörper aufweist, der mit einer durch Plasmabeschichtung erzeugten hydrophilen Oberflächenschicht versehen ist.

7. Verdunstungskühler (2) nach einem der Ansprüche 1 bis 6, bei dem mindestens eines der Kühlelemente (12) einen Grundkörper aufweist, der mit einer durch Flammbeschichtung erzeugten hydrophilen Oberflächenschicht versehen ist.

8. Verdunstungskühler (2) nach einem der Ansprüche 1 bis 7, bei dem mindestens eines der Kühlelemente (12) einen Grundkörper mit einer durch physikalische Oxidation, insbesondere durch atmosphärische oder vakuumbasierte Plasmabehandlung, durch elektrolytische Oxidation, durch Koronaentladung oder durch Beflammung, hydrophilierten Oberfläche aufweist.

9. Verdunstungskühler (2) nach einem der Ansprüche 1 bis 8, bei dem mindestens eines der Kühlelemente (12) einen Grundkörper mit einer durch chemische Oxidation, insbesondere mit Ozon, Wasserstoffperoxid oder Fluor als Oxidationsmittel, hydrophilierten Oberfläche aufweist.

10. Verdunstungskühler (2) nach einem der Ansprüche 1 bis 9, bei dem mindestens eines der Kühlelemente (12) einen Grundkörper mit einer durch Ätzen oder Beizen mit einer Säure oder mit einer Lauge hydrophilierten Oberfläche aufweist.

11. Verwendung eines Verdunstungskühlers (2) nach einem der Ansprüche 1 bis 10 als Ansaugkühler zur Kühlung der einer thermischen Kolbenmaschine oder einer thermischen Strömungsmaschine, insbesondere einer Gasturbine, zugeführten Ansaug- oder Verbrennungsluft.

12. Gasturbinenanlage mit einem Verdichter, einer Brennkammer und einer Gasturbine, wobei dem Verdichter ansaugseitig ein Verdunstungskühler (2) nach einem der Ansprüche 1 bis 10 vorgeschaltet ist.
